# EUROPÄISCHE PATENTSCHRIFT

(11) **EP 2 417 220 B1**
(45) Veröffentlichungstag und Bekanntmachung des Hinweises auf die Patenterteilung: **16.07.2014**
(21) Anmeldenummer: 10712423.2
(22) Anmeldetag: 31.03.2010
(51) Int. Cl.: C09K 19/54, C09D 11/00, B41M 3/14, B42D 15/00

(54) **MIKROKAPSEL MIT FLÜSSIGKRISTALL**
MICROCAPSULE COMPRISING LIQUID CRYSTAL
MICROCAPSULE À BASE DE CRISTAL LIQUIDE

(30) Priorität: 06.04.2009 DE 102009016525
(43) Veröffentlichungstag der Anmeldung: 15.02.2012
(73) Patentinhaber: Giesecke & Devrient GmbH, 81677 München (DE)
(72) Erfinder: BORNSCHLEGL, Alexander, 81735 München (DE); MENGEL, Christoph, 83607 Holzkirchen (DE); HOFFMÜLLER, Winfried, 83646 Bad Tölz (DE)
(86) Internationale Anmeldenummer: PCT/EP2010/054314
(87) Internationale Veröffentlichungsnummer: WO 2010/115809

(56) Entgegenhaltungen:
- EP-A1- 0 400 220
- EP-A1- 1 850 307
- WO-A1-90/02054
- WO-A1-03/052497
- GB-A- 1 201 230
- GB-A- 1 387 389
- US-A- 3 585 381
- US-A1- 2003 174 263
- US-A1- 2006 027 783
- US-A1- 2006 115 604
- US-A1- 2008 067 471
- US-A1- 2008 187 687

## Beschreibung

Die Erfindung betrifft eine Druckschicht umfassend Mikrokapseln, ein Verfahren zur Herstellung einer solchen Druckschicht, ein Sicherheitselement sowie einen Datenträger und ein Transferelement umfassend ein solches Sicherheitselement.

Allgemein werden Sicherheitselemente häufig mit zahlreichen Sicherheitsmerkmalen ausgestattet, die ein Fälschen verhindern. Solche Sicherheitsmerkmale können durch einen Betrachter erkennbare, beispielsweise visuell erkennbare Merkmale, sogenannte Humanmerkmale, oder maschinenlesbare Merkmale sein, oder Merkmale, die beides in sich vereinen.

Datenträger, wie Wert- oder Ausweisdokumente, oder auch andere Wertgegenstände, wie etwa Markenartikel oder Verpackungen von hochwertigen Produkten, werden zur Absicherung mit Sicherheitselementen versehen, die eine Überprüfung der Echtheit des Gegenstandes gestatten und die zugleich als Schutz vor unerlaubter Reproduktion dienen. Weiterhin erzeugen Sicherheitselemente häufig einen gut sichtbaren optischen Eindruck, weswegen solche Sicherheitselemente neben ihrer Funktion als Sicherungsmittel bisweilen auch als dekorative Elemente für solche Datenträger oder Verpackungen verwendet werden. Ein Sicherheitselement kann in solche Datenträger, beispielsweise in eine Banknote oder eine Chipkarte, eingebettet sein oder als selbsttragendes oder nicht-selbsttragendes Transferelement ausgebildet sein, beispielsweise als nicht-selbsttragendes Patch oder als selbsttragendes Etikett, das nach seiner Herstellung auf einen zu sichernden Datenträger oder sonstigen Gegenstand, beispielsweise über einem Fensterbereich des Datenträgers, aufgebracht wird.

Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, und auch kartenförmige Datenträger, insbesondere Chipkarten, sowie Produktsicherungselemente wie Etiketten, Siegel, Verpackungen und dergleichen. Der Begriff "Datenträger" umfasst auch nicht umlauffähige Vorstufen solcher Datenträger, die beispielsweise im Fall von Sicherheitspapier in quasi endloser Form vorliegen und zu einem späteren Zeitpunkt weiterverarbeitet werden, etwa zu Banknoten, Schecks, Aktien und dergleichen.

Um eine Fälschung oder Nachbildung von solchen Sicherheitselementen mit beispielsweise hochwertigen Farbphotokopiergeräten zu verhindern, können Sicherheitselemente Sicherheitsmerkmale aufweisen, die durch ein Farbphotokopiergerät weder erzeugt noch erkannt werden können. Hierzu ist beispielsweise die Verwendung optisch variabler Elemente bekannt, die dem Betrachter unter verschiedenen Betrachtungswinkeln verschiedene optische Eindrücke, insbesondere Farbeindrücke, vermitteln. Zur Erzeugung von Funktions- oder Effektschichten, die solche optisch variablen Effekte zeigen, sind verschiedene Techniken bekannt. Beispielsweise können optische Interferenzschichten vollflächig oder in Pigmentform vorliegen. Solche Interferenzschichten weisen typischerweise einen Dünnschichtaufbau auf und umfassen eine Reflexionsschicht, eine Absorberschicht und eine oder mehrere dazwischen liegende dielektrische Abstandsschichten und basieren beispielsweise auf Glimmer, auf SiO₂ oder auf Al₂O₂. Anstelle von Interferenzschichten oder Interferenzschichtpigmenten können auch cholesterische Flüssigkristalle verwendet werden, welche beispielsweise als flüssigkristalline Silikonpolymere vorliegen.

Die verschiedenen optischen Eindrücke für einen Betrachter können einen so genannten Farbkippeffekt vermitteln, bei dem für den Betrachter unter verschiedenen Betrachtungswinkeln verschiedene Farbtöne erkennbar sind. Verschiedene optische Eindrücke können auch dadurch entstehen, dass unter einem bestimmten Betrachtungswinkel die Effektschicht vollständig transparent und somit für einen Betrachter unsichtbar ist, während sie unter einem anderen Betrachtungswinkel (Effektwinkel) einen Farbton zeigt.

Interferenzschichten, Druckfarben mit Interferenzschichtpigmenten oder Druckfarben mit flüssigkristallinen Pigmenten sind häufig unter allen Betrachtungswinkeln stark transluzent, so dass der bei Betrachtung der Effektschicht unter dem Effektwinkel für den Betrachter erkennbare Farbeindruck relativ schwach ist. Solche Effektschichten mit starker Lichtdurchlässigkeit werden zur Verbesserung der Erkennbarkeit des Farbwechsels daher vorzugsweise über dunklen oder schwarzen Hintergründen aufgetragen.

Weiterhin sind aus den Druckschriften EP 1972463 und WO 2008/017869 die Verwendung photonischer Kristalle in Sicherheitselementen bekannt. Photonische Kristalle zeichnen sich durch eine periodische Variation des Brechungsindex aus, wodurch eine so genannte optische Bandlücke entsteht, in der keine Lichtausbreitung innerhalb des photonischen Kristalls möglich ist. Diese Druckschrift offenbart weiterhin die Möglichkeit, die periodische Variation des Brechungsindex durch äußeren mechanischen Druck zu verändern, wodurch ein photonischer Kristall mit piezochromen Eigenschaften entsteht.

Im Allgemeinen bezeichnet der Begriff "Piezochromie" die Eigenschaft eines Materials in Folge einer Änderung der räumlichen Ausdehnung, beispielsweise in Folge eines mechanischen Drucks, den erzeugten Farbeindruck zu verändern, indem beispielsweise der Wellenlängenbereich, in dem Licht reflektiert wird, verändert wird. In der vorliegenden Druckschrift wird der Begriff "Piezochromie" jedoch wesentlich breiter verwendet und es werden alle Materialien, die auf eine Änderung ihrer räumlichen Ausdehnung, mit einer Änderung ihrer optischen Eigenschaften reagieren als "piezochrom" bezeichnet.

Die aus den Druckschriften EP 1972463 und WO 2008/017869 bekannten piezochromen, photonischen Kristalle besitzen jedoch eine nur geringe Flexibilität und eine ungünstige Oberflächenstruktur, weswegen solche piezochromen, photonischen Kristalle in Wertpapieren, wie beispielsweise Banknoten, nur bedingt eingesetzt werden können. Zudem ist der Herstellungsprozess solcher Materialien in der Regel mit einem hohen Aufwand verbunden. (s. Photonic Crystals- Advances in Design, Fabrication and Characterization, Wiley-VCH, 2004,109-131153-173 [0007]

Mikrokapseln zur Verkapselung chemischer Substanzen sind in der Literatur umfangreich beschrieben. Speziellere Ausführungen finden sich beispielsweise aus den Fachartikeln von Skirtach et al. ("Laser-Induced Release of Encapsulated Materials inside Living Cells", Angew. Chem. Int. Ed. 2006, 45, 4612 - 4617) und Angelatos et al. ("Light-Responsive Polyelectrolyte/Gold Nanoparticle Microcapsules", J. Phys. Chem. B 2005,109, 3071- 3076) bekannt. Diese Mikrokapseln bestehen aus einem Polymer oder einem Polyelektrolyten und können mehrschichtig aufgebaut sein. Sie sind Hohlkörper, die die gewünschte Substanz in ihrem Innern verkapseln. Je nach Anwendung können Mikrokapseln verschiedener Größe geschaffen werden, wobei deren Durchmesser typischerweise im Nano- oder Mikrometerbereich liegen. Mit Hilfe solcher Mikrokapseln kann die eingeschlossene chemische Substanz gezielt in beispielsweise biologische oder medizinische Systeme eingebracht werden und dann die Wechselwirkung der verkapselten Substanz mit dem System über eine gezielte Zerstörung der Mikrokapseln gesteuert werden. Die gezielte Zerstörung geschieht dabei beispielsweise über eine Steuerung des pH-Wertes, der Temperatur, der Konzentration einer die Mikrokapseln zerstörenden Substanz oder über eine Bestrahlung beispielsweise mit einem Laser. Dazu werden diese Mikro- oder Nanokapseln aus einem geeigneten Material aufgebaut oder geeignet modifiziert. Im Fall der Laserbestrahlung werden beispielsweise absorbierende Stoffe in die Hülle der Mikrokapseln eingebaut, die eine Absorption der Laserstrahlung bewirken. Dies sind beispielsweise entsprechend absorbierende organische oder anorganische Stoffe oder auch kolloidale oder nanoskalige Silber- oder Goldpartikel. Die Mikrokapseln können dann beispielsweise gezielt durch Laserstrahlung im ultravioletten, sichtbaren, nahen oder fernen Infrarot zerstört werden.

Druckschrift EP 0 400 220 A1 (= D1) beschreibt einen laminierten Gegenstand mit einer sichtbaren Information, wobei der Gegenstand thermochrome Flüssigkristalle des cholesterischen Typs in der Form eines Musters oder eines Zeichens enthält, das mittels einer Farbänderung durch Erwärmen oberhalb von 25°C sichtbar gemacht werden kann. Das flüssigkristalline Material kann in Gelatine eingekapselt sein.

Druckschrift GB 1387389 B beschreibt ein Sicherheitsdokument mit Kapseln mit einem Durchmesser von mindestens 5 µm, wobei die Kapseln ein cholesterisches flüssigkristallines Material beinhalten, das bei erhöhter Temperatur eine sichtbare Farbveränderung zeigt.

Druckschrift WO 03/052497 A1 beschreibt eine gedruckte Information, bei der eine aus cholesterischen Flüssigkristallen in mikroverkapselter Form erzeugte Tinte oberhalb eines Substrats mit einem thermochromen oder photochromen Hintergrundes aufgebracht ist.

Druckschrift US 2008/0187687 A1 beschreibt eine Zusammensetzung mit cholesterischen Flüssigkristallen, einem Polymer und Partikeln mit hydrophoben Oberflächen. Des Weiteren werden Anwendungen der Zusammensetzung u.a. für Displays beschrieben.

Druckschrift US 2008/0067471 A1 beschreibt eine Zusammensetzung mit einem cholesterischen Flüssigkristall, einem Polymer und konkaven und konvexen Teilen, die an der Grenzfläche zwischen einem den cholesterischen Flüssigkristall enthaltenden Bereich und einem das Polymer enthaltenden Bereich lokalisiert sind.

Druckschrift US 2006/0115604 A1 beschreibt eine Flüssigkristallmikrokapsel, die einen Flüssigkristall und einen speziellen, den Flüssigkristall einkapselnden Polyharnstoff-Film enthält.

Druckschrift US 2003/0174263 A1 beschreibt cholesterische Flüssigkristalle in mikroverkapselter Form, die als Hintergrund oder als gedruckte Information als Teil eines eine reversible Information tragenden Systems eingesetzt werden.

Aufgabe der vorliegenden Erfindung ist es, ein Sicherheitselement für Datenträger zu schaffen, welches verbesserte Eigenschaften in Bezug auf Handhabung und Fälschungssicherheit zeigt, und geeignete Mittel zu dessen Aufbau anzugeben.

Diese Aufgabe wird durch eine Druckschicht, ein Verfahren zur Herstellung einer Druckschicht, ein Sicherheitselement, einen Datenträger und ein Transferelement mit den Merkmalen der unabhängigen Ansprüche gelöst. Die abhängigen Ansprüche betreffen bevorzugte Ausgestaltungen und Weiterbildungen der Erfindung.

Die Erfindung basiert auf der Erkenntnis, dass flüssigkristalline Materialien derart geeignet verkapselt werden können, dass zum einen deren für eine Verwendung in Sicherheitselementen relevanten, beispielsweise optische Druckschrift US 3,585,381 B1 beschreibt Display-Vorrichtungen mit einem verkapselten Flüssigkristall vom cholesterischen Typ.

Druckschrift GB 1201230 B1 beschreibt eine Display-Vorrichtung mit einem Paar beabstandete Elektroden, zwischen denen ein cholesterischer Flüssigkristall angeordnet ist, der farblich auf ein elektrisches Feld anspricht, wobei der Flüssigkristall in einem Polymermaterial eingehüllt ist.

Druckschrift WO 90/02054 A1 beschreibt eine Zusammensetzung für das Ausschmücken eines Substrats, die eine oder mehrere thermochrome Substanzen und ein Bindemittel enthält. Als thermochrome Substanzen werden u.a. nematische, cholesterische und smektische Flüssigkristalle genannt. Bevorzugt werden mikroverkapselte, chirale, nematische Flüssigkristalle, die in einem wässrigen Medium suspendiert sind, verwendet.

Druckschrift US 2006/0027783 A1 beschreibt ein Display mit einer Schicht, die ein Bindemittel und eine darin dispergierte, insbesondere mikroverkapselte Flüssigkristallzusammensetzung enthält.

Druckschrift EP 1 850 307 A1 beschreibt ein Identifikationsmedium, das u.a. eine Farbschicht mit cholesterischen Flüssigkristallen enthält.

Eigenschaften erhalten bleiben, und dass zum anderen deren weitere Verwendung beispielsweise in Sicherheitselementen vereinfacht wird.

Demzufolge baut die Erfindung auf einer Mikrokapsel auf, in deren Inneren ein Flüssigkristall angeordnet ist. Die Mikrokapsel selbst ist ein Hohlkörper, der mit flüssigkristallinem Material gefüllt ist. Als Material für die Hülle der Mikrokapsel eignen sich die an sich bekannten Materialien, wie synthetische und natürliche Polymere (z.B. Polyurethane, Polyharnstoffe, Melaminharze, Proteine (Gelatine) und Polylactate.

Flüssigkristalle können beispielsweise in lyotroper oder thermotroper Form vorliegen. Dabei liegen thermotrope Flüssigkristalle bei niedrigeren Temperaturen in kristalliner Form vor, während sie bei Temperaturen oberhalb des so genannten Klärpunkts isotrop sind. In einem dazwischenliegenden Temperatur bereich liegt ein thermotroper Flüssigkristall in einer flüssigkristallinen Phase vor. Die Eigenschaften der Flüssigkristalle werden vorzugsweise derart gewählt, dass sie bei den beabsichtigten Verarbeitungs- und Verwendungsbedingungen in einer flüssigkristallinen Phase vorliegen.

Die flüssigkristalline Phase ist eine cholesterische Phase. Die Mikrokapsel besitzt dabei eine geeignete Größe, so dass optische Eigenschaften der cholesterischen Phase, die für die geplante Verwendung der Mikrokapsel relevant sind, erhalten bleiben. Dies betrifft beispielsweise die selektive Reflektion von Licht mit einer Wellenlänge, welche proportional zur Ganghöhe der Schraubenachse der Helixstruktur der cholesterischen Phase ist, und mit einem Drehsinn, welcher dem Drehsinn der Schraubenachse der Helixstruktur der cholesterischen Phase entspricht.

Die Mikrokapseln können isotrop, d. h. vollständig sphärisch, oder anisotrop, d.h. nicht vollständig sphärisch, ausgebildet sein. Vorzugsweise sind die Mikrokapseln anisotrop ausgebildet, so dass sowohl für die Orientierung der cholesterischen Phase im Inneren der Mikrokapseln als auch für die Orientierung der Mikrokapsel selbst bei ihrer Verwendung in einer Druckschicht eine Vorzugsrichtung derart gegeben ist, dass sich die Schraubenachse der Helixstruktur der cholesterischen Phase im Inneren der Mikrokapsel geeignet gegenüber der Druckschicht orientiert. Weiterhin zeigen anisotrope Mikrokapseln eine gegenüber isotropen Mikrokapseln erhöhte optische Brillanz.

Typischerweise umfasst ein cholesterischer Flüssigkristall einen Flüssigkristall in einer nematischen Phase und eine Verdrillersubstanz, die sogenannte chirale Dotierung, welche die Helixstruktur des Flüssigkristalls induziert. Dabei beeinflusst die Wirkung der Verdrillersubstanz, beispielsweise ihre Konzentration, die Ganghöhe der Helixstruktur der cholesterischen Phase, während der nematische Flüssigkristall in erster Linie das temperaturabhängige Phasenverhalten vorgibt. In einer bevorzugten Ausgestaltung der Mikrokapsel ist die Wirkung der Verdrillersubstanz im Inneren der Mikrokapsel beeinflussbar. Somit kann die Ganghöhe der Helixstruktur der cholesterischen Phase durch äußere Einwirkung eingestellt werden.

In einer bevorzugten Ausgestaltung umfasst die Mikrokapsel dabei eine oder eine Vielzahl von kleineren Mikro- oder Nanokapseln, welche eine zweite Verdrillersubstanz enthalten. Durch gezieltes Zerstören der kleineren Mikro- oder Nanokapseln innerhalb der sie umgebenden, größeren Mikrokapsel kann dann die zweite Verdrillersubstanz innerhalb der Mikrokapsel freigesetzt werden und somit die Ganghöhe der Helixstruktur der cholesterischen Phase auf einen vorbestimmten Wert eingestellt werden. Der Aufbau der Hülle der kleineren, die zweite Verdrillersubstanz enthaltenden Mikro- oder Nanokapseln unterscheidet sich dabei von dem Aufbau der Hülle der größeren, den cholesterischen Flüssigkristall und die kleineren Mikro- oder Nanokapseln enthaltenden Mikrokapsel dahingehend, dass die kleineren Mikro- oder Nanokapseln für eine gezielte Zerstörung beispielsweise durch Laserbestrahlung vorgesehen sind, während die größere Mikrokapsel vorzugsweise nicht für eine Zerstörung vorgesehen ist.

Alternativ oder zusätzlich ist die cholesterische Phase thermochrom, so dass die Ganghöhe der Helixstruktur der cholesterischen Phase durch Einstellen einer geeigneten Temperatur eingestellt werden kann.

Erfindungsgemäß enthält die Mikrokapsel neben dem cholesterischen Flüssigkristall eine Vorstufe eines Polymers, welche ein Monomer oder eine anderweitige präpolymere Substanz ist. Das Polymer kann dann im Inneren der Mikrokapsel derart vernetzt werden, dass die Lage und Orientierung der Moleküle des Flüssigkristalls und somit auch die Orientierung der Schraubenachse der Helixstruktur der cholesterischen Phase im Inneren der Mikrokapsel fixiert ist. Dazu vernetzt das Polymer vorzugsweise auch mit der Innenwand der Mikrokapseln. Die Vernetzung geschieht vorzugsweise durch geeignete Bestrahlung beispielsweise durch Strahlung im UV-Bereich.

Das Polymer ist ein kompressibles Elastomer und die Mikrokapsel selbst ist ebenfalls elastisch. Dadurch kann die Ganghöhe des fixierten cholesterischen Flüssigkristalls durch eine äußere Kraft, beispielsweise durch einen mechanischen Druck, in Richtung der Schraubenachse der Helixstruktur verändert werden. Dies geschieht vorzugsweise reversibel. Die Helixstruktur der cholesterischen Phase besitzt dann in einem komprimierten Zustand der Mikrokapsel eine gegenüber dem unkomprimierten Zustand der Mikrokapsel, der sogenannten Ruhelage, eine veränderte, insbesondere verringerte Ganghöhe. Die Mikrokapsel reflektiert in ihrer unkomprimierten Ruhelage Licht längerer Wellenlänge und in einem komprimierten Zustand Licht entsprechend kürzerer Wellenlänge. Dies beruht auf der an sich bekannten Tatsache, dass die Wellenlänge des reflektierten Lichts gleich dem Produkt der Ganghöhe der cholesterischen Phase und dem durchschnittlichen Brechungsindex im Inneren der Mikrokapsel ist. Somit wird ein piezochromer Effekt erzeugt.

In einer Druckfarbe sind die Mikrokapseln in ein geeignetes Bindemittel eingebracht. Mit Hilfe der Druckfarbe ist es möglich, Flüssigkristalle auf beliebige Substrate aufzubringen. Eine spezielle Eignung des Substrats zur Aufbringung von Flüssigkristallen ist wegen der Mikroverkapselung nicht notwendig. Weiterhin kann die Druckfarbe mit Hilfe bekannter Drucktechniken auf das Substrat aufgebracht werden und der verkapselte Flüssigkristall kann mit allgemein verfügbaren Druckmaschinen aufgebracht werden. Die Druckfarbe kann zusätzlich auch in an sich bekannter Weise Farbstoffe oder Farbzusätze enthalten. Vorzugsweise zeigen die Druckfarbe und die daraus erzeugte Druckschicht einen optisch variablen Effekt.

Zur Herstellung der erfindungsgemäßen Druckschicht wird zunächst die Druckfarbe schichtartig auf ein geeignetes Substrat aufgebracht. Dies kann mit Hilfe bekannter Drucktechniken vorzugsweise mittels Tief-, Flexo- oder Siebdruck geschehen.

Anschließend wird die Ganghöhe der cholesterischen Phase auf eine vorbestimmte Ganghöhe eingestellt. Verschiedene Möglichkeiten dazu werden weiter unten erläutert.

Abschließend wird unter Beibehaltung der zuvor eingestellten, vorbestimmten Ganghöhe die Vorstufe des Polymers vernetzt und somit der cholesterische Flüssigkristall in dem Polymer im Innern der Mikrokapseln fixiert.

In einem weiteren Schritt oder zugleich mit dem Vernetzen des Polymers wird das Bindemittel der Druckfarbe fixiert, was durch Trocknung des Bindemittels geschehen kann.

In einer bevorzugten Ausgestaltung des erfindungsgemäßen Herstellungsverfahrens der Druckschicht zeigt die cholesterische, flüssigkristalline Phase im Innern der Mikrokapseln ein thermochromes Verhalten. Dadurch kann durch Steuerung der Temperatur der aufgebrachten Druckfarbe während der Vernetzung des Polymers die vorbestimmte Ganghöhe der cholesterischen Phase im Innern der Mikrokapseln gezielt eingestellt werden. Bei solchen thermochromen, cholesterischen Phasen führt eine Erhöhung der Temperatur zu einer Verringerung der Ganghöhe und damit zu einer in den kurzwelligen Bereich des elektromagnetischen Spektrums verschobenen Reflexion an den Mikrokapseln. Weiterhin können dabei zusätzliche wärmespeichernde Pigmente innerhalb der Druckfarbe zum Einsatz, wodurch die Temperatur während der Vernetzung des Polymers konstant gehalten werden kann. Weiterhin können der Druckfarbe elektromagnetische Strahlung absorbierende Stoffe, beispielsweise Laserabsorber, zugesetzt werden, um eine gezielte Erwärmung der aufgebrachten Druckfarbe zu ermöglichen. Ebenso kann die Temperatur der aufgebrachten Druckfarbe verringert werden, um eine vergrößerte Ganghöhe der cholesterischen Phase und damit eine in den langwelligen Bereich des elektromagnetischen Spektrums verschobene Reflexion der Druckschicht zu erhalten.

Vorzugsweise weist eine solche aufgebrachte Druckfarbe mit Mikrokapseln mit thermochromer, cholesterischer Phase während der Vernetzung des Polymers bereichsweise unterschiedliche Temperaturen auf, wodurch innerhalb der Druckschicht bereichsweise unterschiedliche vorbestimmte Ganghöhen erhalten werden. Dadurch reflektiert die Druckschicht in verschiedenen Teilbereichen elektromagnetische Strahlung mit verschiedenen Wellenlängen.

In einer bevorzugten alternativen Ausgestaltung des Herstellungsverfahrens wird die vorbestimmte Ganghöhe durch Einstellen der Wirkung einer Verdrillersubstanz im Innern der Mikrokapseln eingestellt. Die Wirkung der Verdrillersubstanz kann beispielsweise durch Modifizieren der Verdrillersubstanz selbst, durch Veränderung ihrer Konzentration oder durch Zugabe einer weiteren Verdrillersubstanz eingestellt werden.

In einer bevorzugten Ausgestaltung ist die Verdrillersubstanz photosensitiv. Solche Materialien, deren Chiralität oder Verdrillerwirkung sich durch Licht, beispielsweise in Form von Laserstrahlung, beeinflussen lässt, werden oft als einstellbare, chirale Materialien (TCM, tunable chirale materials) bezeichnet. Die Laserstrahlung beeinflusst dabei die Verdrillersubstanz vorzugsweise dahingehend, dass deren Drehkraft durch einen Bindungsbruch, eine Rotation oder eine Umlagerung in den Molekülen der Verdrillersubstanz verändert wird. Die Wellenlänge, die Strahlungsdichte und die Pulslänge des Laserlichtes werden dabei geeignet eingestellt, um die gewünschte Wirkung der Verdrillersubstanz und somit die gewünschte Ganghöhe zu erhalten. Beispielsweise können Verdriller auf Binaphtyl-Basis verwendet werden, deren Verdrillerwirkung mit Hilfe von Licht im UV-Bereich eingestellt werden kann. Alternativ können auch Substanzen aus dem Bereich der sogenannten molekularen Schalter eingesetzt werden, welche als Verdrillersubstanzen wirken und bei Bestrahlung im kurzwelligen, sichtbaren Bereich des elektromagnetischen Spektrums geeignete Isomerisierungsreaktionen zeigen.

Eine solche Reaktion kann in einer photosensitiven Verdrillersubstanz auch durch Mehrphotonenprozesse bei Bestrahlung mit elektromagnetischer Strahlung im langwelligen, sichtbaren Bereich und im Infrarot-Bereich erhalten werden. Solche Mehrphotonenprozesse finden typischerweise erst bei einer hohen Strahlungsleistung statt, was bei Verwendung von Kurz- und Ultrakurzpulslasern, gegebenenfalls in Kombination mit einer starken Fokussierung des Laserlichts, jedoch realisiert werden kann. Bevorzugt werden dazu Laser im nahen Infrarotbereich, beispielsweise Nd:YAG-Laser, verwendet.

Auch bei Verwendung einer solchen Laserlichtquelle kann innerhalb der Druckschicht eine bereichsweise unterschiedliche Einstellung der Wirkung der Verdrillersubstanz, beispielsweise durch eine geeignete Ablenkung des die Wirkung der Verdrillersubstanz beeinflussenden Laserlichts, erhalten werden. Alternativ kann eine bereichsweise unterschiedliche Bestrahlung auch mit Hilfe von Masken oder Schablonen erreicht werden, was vor allem bei Bestrahlung im UV-Bereich vorteilhaft ist.

In einer weiteren Ausgestaltung ist die Verdrillersubstanz thermolabil und kann durch geeignete Bestrahlung teilweise oder vollständig zerstört werden. Die thermische Einwirkung der Bestrahlung kann durch absorbierende Substanzen innerhalb der aufgebrachten Druckfarbe weiter verstärkt werden. Eine solche starke thermische Wirkung der Bestrahlung tritt beispielsweise im Bereich eines Laserfokus auf. Führt dieser Effekt zur vollständigen Zerstörung der Verdrillersubstanz, wodurch die Helixstruktur aufgelöst wird und keine cholesterische Phase mehr vorliegt, wird er auch "thermische Razemisierung" genannt. Diese tritt vor allem bei Biarylen, beispielsweise Binaphthyl, und Spiro-Verbindungen auf.

In einer weiteren Ausgestaltung des erfindungsgemäßen Herstellungsverfahrens wird die Wirkung der Verdrillersubstanz durch Zugabe einer weiteren, zweiten Verdrillersubstanz verändert. Die zweite Verdrillersubstanz wird dabei vorzugsweise in abgeschlossenen Kapseln im Innern der Mikrokapseln bereitgestellt und das Einstellen der vorbestimmten Ganghöhe der cholesterischen Phase geschieht durch gezieltes Zerstören zumindest eines Teils der Kapseln, was beispielsweise durch eine geeignete Bestrahlung geschehen kann. Dabei kann die zweite Verdrillersubstanz die Wirkung der ursprünglichen Verdrillersubstanz verstärken oder vermindern und somit die Ganghöhe der cholesterischen Phase jeweils verringern oder erhöhen.

In einer bevorzugten Ausgestaltung der erfindungsgemäßen Druckschicht ist diese elastisch kompressibel. Dazu weist die aufgebrachte Druckfarbe elastische Mikrokapseln auf deren Polymer ein kompressibles Elastomer ist. Weiterhin weist dann auch das Bindemittel der Druckfarbe im fixierten Zustand geeignete elastische Eigenschaften auf. Vorteilhafterweise sind die elastischen Eigenschaften der Druckschicht einstellbar, was durch gezielte Vernetzung des Elastomers im Innern der Mikrokapseln und geeignete Behandlung des Bindemittels der Druckfarbe geschehen kann. Dazu wird das Bindemittel beispielsweise ebenfalls durch Vernetzung fixiert.

Dadurch kann eine Druckschicht erzeugt werden, deren optische und gegebenenfalls elastische Eigenschaften nach dem Aufdrucken der Druckfarbe eingestellt werden kann.

Die elastische Eigenschaften einer solchen elastisch kompressiblen Druckschicht werden vorzugsweise so eingestellt, dass ein bestimmungsgemäßer mechanischer Druck zu einer ausreichenden Veränderung der Ganghöhe der cholesterischen Phase führt, so dass der beabsichtigte piezochrome Effekt beobachtet werden kann.

Alternativ oder zusätzlich können auch elastische, kompressible Füllkörper innerhalb des Bindemittels der Druckfarbe oder im Innern der Mikrokapseln vorgesehen sein.

Die Druckschicht weist wenigstens zwei Bereiche auf, welche voneinander verschiedene elastische Eigenschaften besitzen. Damit können innerhalb der entstehenden Druckschicht bereichsweise verschiedene optische und/oder elastische Eigenschaften eingestellt werden. Zeigen beide Bereiche in der unkomprimierten Ruhelage des Elastomers identische optische Eigenschaften, indem beide Bereiche eine identische vorbestimmte Ganghöhe der cholesterischen Phase aufweisen, so deformieren sich beide Bereiche bei Ausübung eines gleichmäßigen mechanischen Drucks auf die Druckschicht unterschiedlich, wodurch sich in einem komprimierten Zustand der Druckschicht bereichsweise unterschiedliche Ganghöhen ergeben und somit beide Bereiche anhand ihrer unterschiedlichen Reflexionsfarben beispielsweise von einem Betrachter nach oder bei Ausübung eines mechanischen Drucks erkannt werden können. Vorzugsweise bilden die beiden Bereiche dabei eine Information für den Betrachter.

In einer bevorzugten Ausgestaltung der elastisch kompressiblen Druckschicht kehrt diese nach Kompression nur zeitlich verzögert in eine unkomprimierte Ruhelage zurück. Dadurch kann der erzeugte piezochrome Effekt auch nach Beendigung eines mechanischen Drucks beobachtet werden. Dies ist vorteilhaft, wenn der mechanische Druck beispielsweise durch den Finger eines Betrachters ausgeübt wird, welcher bei der Ausübung des mechanischen Drucks das Sicherheitselement verdeckt. Ein solches Rückstellverhalten lässt sich bei Verwendung von elastischen, kompressiblen Füllkörpern gut realisieren.

Das erfindungsgemäße Sicherheitselement umfasst die Mikrokapseln, welche in einer Druckschicht angeordnet sind. Dabei wird die Druckschicht in dem Sicherheitselement in Betrachtungsrichtung vorzugsweise vor einem dunklen, stark absorbierenden, insbesondere schwarzen Untergrund angeordnet, um die Sichtbarkeit des reflektierten Lichts zu erhöhen.

In einer bevorzugten Ausgestaltung des erfindungsgemäßen Sicherheitselementes mit einer elastisch kompressiblen Druckschicht befindet sich in Blickrichtung des Betrachters hinter der Druckschicht eine Information, welche in der unkomprimierten Ruhelage der Druckschicht verborgen ist und erst bei Kompression erkennbar wird. Dies wird vorzugsweise dadurch erreicht, dass die Information sich farblich von dem dunklen Hintergrund abhebt, die Farbe der Information jedoch identisch mit der Farbe ist, die die cholesterische Phase in der unkomprimierten Ruhelage der Druckschicht reflektiert. In einer weiteren Ausgestaltung des Sicherheitselements ist in Blickrichtung der Druckschicht eine weitere Schicht angeordnet, die einen optisch variablen Effekt aufweist. Dadurch kann die Fälschungssicherheit des Sicherheitselements weiter erhöht werden.

Ein erfindungsgemäßes Sicherheitselement ist vorzugsweise auf einen Datenträger aufgebracht oder ist Teil eines Transferelements, welches das Aufbringen des Sicherheitselements auf einen solchen Datenträger gestattet.

Weitere Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Im Einzelnen zeigen die Figuren:
- Fig.1: eine Banknote mit Sicherheitselement;
- Fig. 2: einen Querschnitt durch eine Mikrokapsel;
- Fig. 3: das Einbringen einer zweiten Verdrillersubstanz;
- Fig. 4: einen Querschnitt durch eine elastische Mikrokapsel;
- Fig. 5: eine Schicht mit bereichsweise verschiedenen optischen und/oder elastischen Eigenschaften; und
- Fig. 6a und 6b: Querschnitte durch Druckschichten.

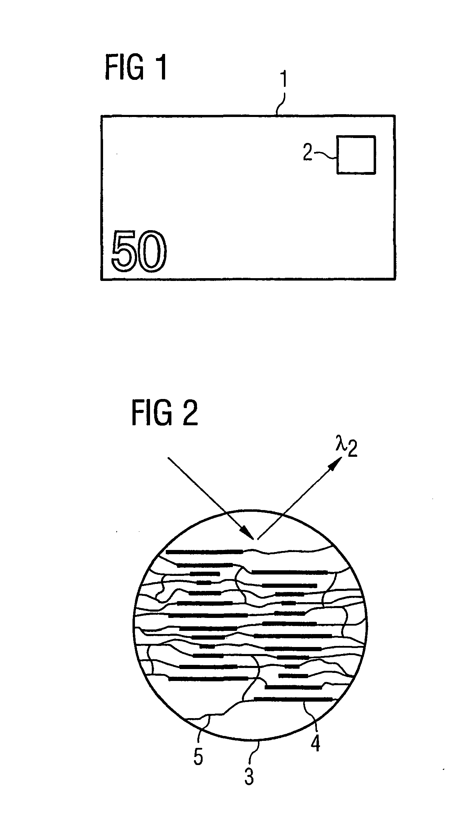

In Fig.1 ist als Datenträger eine Banknote dargestellt, welche ein Sicherheitselement 2 mit einer Druckschicht 10 mit Mikrokapseln 3 umfasst.

In Fig. 2 ist ein Schnitt durch eine Mikrokapsel 3 mit einer cholesterischen, flüssigkristallinen Phase 4 dargestellt. Zur räumlichen Fixierung der cholesterischen Phase 4 und auch zur Kompensation der Temperaturabhängigkeit ihrer Ganghöhe werden die Flüssigkristallmoleküle der cholesterischen Phase 4 mit der Innenwand der elastischen Mikrokapsel 3 und auch untereinander mit Hilfe eines schematisch dargestellten Polymers 5 vernetzt. Das vernetzte Polymer enthält in dem dargestellten Ausführungsbeispiel auch Quervernetzungen. Die gewünschte Vernetzung kann durch eine geeignete Endfunktionalisierung der Flüssigkristallmoleküle, beispielsweise durch Acrylate, und durch die Funktionalität des Materials der elastischen Mikrokapseln, beispielsweise durch Polymersysteme mit funktionellen Acrylgruppen wie z. B. acrylierte Gelatine, erreicht werden.

Die gewünschten optischen Eigenschaften der Mikrokapseln werden durch Einstellen einer vorbestimmten Ganghöhe der cholesterischen Phase vor der Vernetzung des Polymers eingestellt. Hierzu werden vorhandene thermochrome Eigenschaften der cholesterischen Phase genutzt. Dazu wird die Temperatur der Mikrokapsel 3 während der Vernetzung geeignet eingestellt, um die gewünschte vorbestimmte Ganghöhe der cholesterischen Phase 4 in der Mikrokapsel 3 einzustellen.

Alternativ kann die Wirkung einer Verdrillersubstanz oder dessen Konzentration gezielt eingestellt werden. Dazu wird dem cholesterischen Flüssigkristall 4, welcher einen nematischen Flüssigkristall und eine Verdrillersubstanz umfasst, eine weitere, die Ganghöhe beeinflussende chirale Substanz in verkapselter Form beigemischt. Diese zweite Verdrillersubstanz ist in Mikro- oder Nanokapseln verkapselt, wobei diese Kapseln derart modifiziert sind, dass sie durch Bestrahlung gezielt zerstört werden können. Dies geschieht im vorliegenden Ausführungsbeispiel durch Laserstrahlung, welche im UV-Bereich, im sichtbaren Bereich, im Infrarot-Bereich bei beispielsweise 1064 nm oder auch im langwelligen Infrarot-Bereich beispielsweise bei 10,6 µm liegt. Dies wird durch den Einbau von geeignet absorbierenden organischen und anorganischen Stoffen in die Hülle der Mikro- oder Nanokapseln erreicht. Dafür eignen sich besonders kolloidale oder nanoskalige Silber- oder Goldpartikel. Die Kapseln können aus einer oder mehreren Schichten aufgebaut sein. In einer nicht dargestellten Variante werden Laseraktivierbare Treibmittel eingesetzt, welche beim Erhitzen beispielsweise mittels Laserstrahlung in den Mikro- oder Nanokapseln ein Gas freisetzen. Durch die resultierende Volumenvergrößerung werden die Mikro- oder Nanokapseln zerstört. Die nach der Zerstörung der Kapsel austretende zweite Verdrillersubstanz kann die Wirkung der ursprünglichen Verdrillersubstanz des cholesterischen Flüssigkristalls dann verstärken oder vermindern.

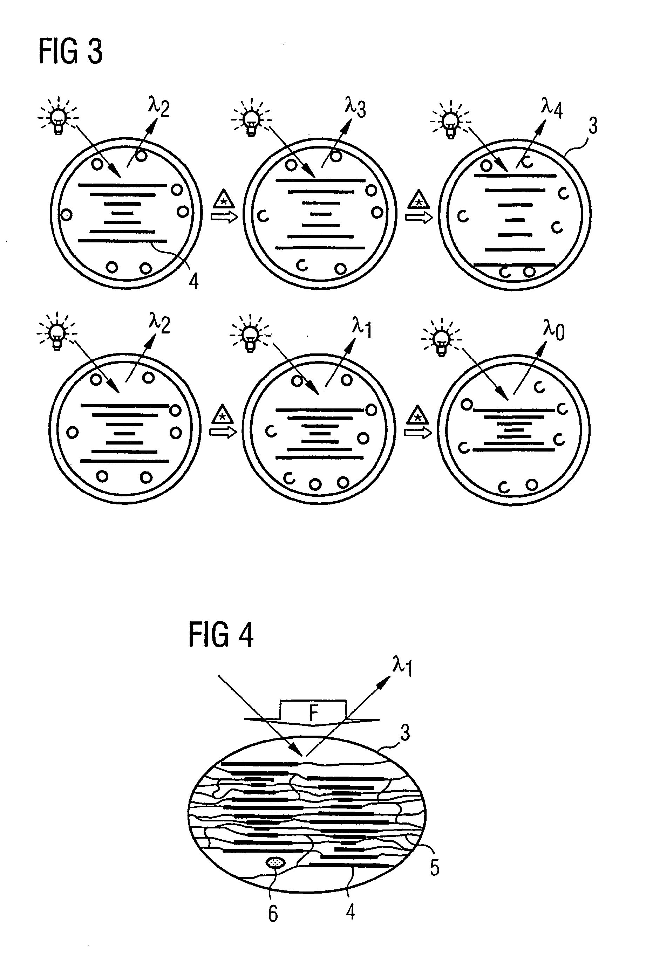

In dem in Fig. 3 dargestellten Ausführungsbeispiel befinden sich im Innern der Mikrokapseln 3 neben dem vernetzbaren, cholesterischen Flüssigkristall 4 eine Vielzahl solcher kleineren Mikro- oder Nanokapseln, welche die zweite Verdrillersubstanz enthalten. In der oberen Reihe in Fig. 3 wird durch gezielte Zerstörung der Mikro- oder Nanokapseln mit Hilfe von Laserbestrahlung eine zweite Verdrillersubstanz freigesetzt, welche die Wirkung der ursprünglichen Verdrillersubstanz vermindert und somit zu einer Vergrößerung der Ganghöhe der cholesterischen Phase 4 führt. Die Wellenlänge des reflektierten Lichtes wird dadurch in den langwelligeren Spektralbereich (λ₃) verschoben. Je länger und intensiver die Bestrahlung durchgeführt wird, mit der die Mikro- oder Nanokapseln zerstört werden, desto größer ist die Anzahl der zerstörten kleineren Mikro- oder Nanokapseln und somit die Menge der austretenden zweiten Verdrillersubstanz, und desto stärker ändert sich die Ganghöhe des cholesterischen Flüssigkristalls und damit die Wellenlänge des reflektierten Lichts (λ₄). In der unteren Reihe in Fig. 3 ist der umgekehrte Fall dargestellt, in dem die zweite Verdrillersubstanz die Wirkung der ursprünglichen Verdrillersubstanz verstärkt und somit zu einer geringeren Ganghöhe der cholesterischen Phase 4 und zu einer in den kurzwelligeren Wellenlängenbereich verschobenen Farbe des reflektierten Lichts (λ₁, λ₀) führt.

Pro zerstörter Mikro- oder Nanokapsel tritt eine definierte Menge der verkapselten zweiten Verdrillersubstanz aus, so dass sich die Wirkung auf die reflektierte Farbe stufenweise erhöht. Über die Anzahl und Größe der Mikrooder Nanokapseln wird der einstellbare Farbbereich und die Abstufung festgelegt.

Die kleineren Mikro- oder Nanokapseln können auch mit einer Substanz gefüllt sein, die die chirale Ordnung der cholesterischen Phase 4 vollständig zerstört, so dass keine selektive Reflexion von Licht mehr auftritt.

In Fig. 4 ist eine elastisch kompressible Mikrokapsel 3 in einem komprimierten Zustand dargestellt. Die Mikrokapsel 3 kann durch mechanischen Druck komprimiert werden, was schematisch durch die Kraft F dargestellt ist. Dadurch verringert sich in der Mikrokapsel 3 die Ganghöhe der cholesterischen Phase 4 und somit die Wellenlänge des reflektierten Lichtes gegenüber dem unkomprimierten Zustand, der der in Fig. 2 dargestellten Mikrokapsel 3 entspricht. Bei in Richtung der Schraubenachse der Helixstruktur der cholesterischen Phase 4 einfallendem Licht, wirkt die cholesterische Phase 4 wie ein Bragg-Gitter und die Ganghöhe der cholesterischen Phase 4 bestimmt die Wellenlänge des selektiv reflektierten Lichtes. Daher reflektiert die cholesterische Phase 3 im unkomprimierten Zustand der Mikrokapsel 3 Licht größerer Wellenlänge (λ₂) als im komprimierten Zustand (λ₁).

Das in Fig. 4 schematisch angedeutete, vernetzbare Polymer kann durch funktionalisierte Seitenketten, beispielsweise Mono-, Bi- oder multifunktionelle Acrylate, der Flüssigkristallmoleküle der cholesterischen Phase 4 geschaffen werden. Diese sind durch UV-Strahlung vernetzbar. Dadurch entsteht ein Seitenkettennetzwerk, in welchem die cholesterische Phase 3 in ihrer räumlichen Lage und Position fixiert ist. Das Seitenkettennetzwerk wird dabei derart vernetzt, dass es elastische Eigenschaften besitzt und kompressibel ist, so dass die Mikrokapsel das gewünschte piezochrome Verhalten mit den gewünschten elastischen Eigenschaften und dem gewünschten Rückstellverhalten zeigt. Besonders geeignet dafür sind längere, flexible, aliphatische oder Alkoxy-Spacergruppen mit endständigen Acrylatfunktionen.

Zur Steuerung der Netzpunktdichte des Seitenkettennetzwerks und dessen Netzbogenlänge wird das Verhältnis zwischen einem Photoinitiator und dem Mono-, Bi- oder multifunktionellen Monomer-Acrylat geeignet eingestellt. Weiterhin können dazu auch flexible, bifunktionelle Einheiten wie beispielsweise N-Butyldiacrylat eingesetzt werden. Zudem besitzt das Seitenkettennetzwerk nach Vernetzung eine hinreichend niedrige Glastemperatur Tg, welche unterhalb der minimalen Einsatztemperatur der Mikrokapsel liegt, um jederzeit eine ausreichende Elastizität sicherzustellen.

Weiterhin kann die elastische Eigenschaft der Mikrokapsel auch durch eine Bindungsspaltung in dem Seitenkettennetzwerk verändert werden. Dazu können Strahlungsquellen im UV-Bereich oder auch Kurz- oder Ultrakurzpulslaser im sichtbaren oder infraroten Bereich verwendet werden.

Bei geeigneter Vernetzung der Flüssigkristalle der cholesterischen Phase 4 mittels des Seitenkettennetzwerks wird zudem eine Änderung der Ganghöhe der cholesterischen Phase 3 in Abhängigkeit der Temperatur unterdrückt.

In einem nicht dargestellten Ausführungsbeispiel befinden sich ähnlich wie bei dem in Fig. 3 dargestellten Ausführungsbeispiel innerhalb der Mikrokapseln eine Vielzahl kleinerer Mikro- oder Nanokapseln. Dieses verkapseln hier jedoch eine Substanz die weitere polymerisierbare Bestandteile und Photoinitiatoren enthält, wodurch ein weiterer Freiheitsgrad zur Einstellung der elastischen Eigenschaften der Mikrokapseln geschaffen wird.

In dem in Fig. 4 dargestellten Ausführungsbeispiel umfasst die elastische Mikrokapsel 3 zudem eine Vielzahl elastischer Füllkörper 6, wodurch die Reversibilität der elastischen Kompression und das Rückkehrverhalten der Mikrokapsel nach Beendigung des mechanischen Drucks F in die elastische Ruhelage gesteuert werden kann. Beispielsweise können die elastischen Eigenschaften der Mikrokapsel derart eingestellt werden, dass diese nur verzögert und langsam in die elastische Ruhelage zurückkehrt. Dadurch kann der Betrachter einer Druckschicht 10 mit solchen Mikrokapseln den Effekt der Kompression auch dann beobachten, wenn die Druckschicht 10 bei Ausübung des Drucks verdeckt wird, beispielsweise durch den Finger des Betrachters. Weiterhin kann das elastische Verhalten der Mikrokapsel so eingestellt werden, dass der Betrachter nach Beendigung des mechanischen Drucks auf eine Druckschicht 10 mit solchen Mikrokapseln einen dynamischen Eindruck erhält.

Die elastischen Füllkörper können Voll- oder Hohlkörper sein. Als Material für solche elastische Füllkörper eignen sich beispielsweise Latex, Natur- oder Synthesekautschuk. Die elastischen Füllkörper können aber auch durch definierte Lufteinschlüsse gebildet werden. Die Füllkörper können zudem noch Merkmalsstoffe, UV-Absorber, eine Laserveränderbarkeit oder sonstige Eigenschaften besitzen, mit deren Hilfe die elastischen Eigenschaften gesteuert werden können.

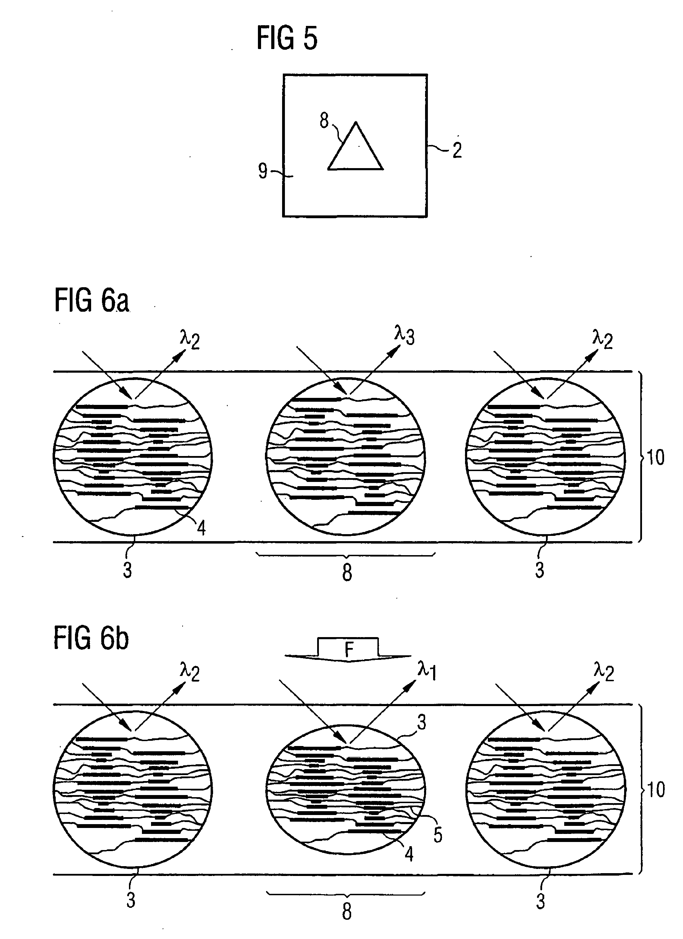

Innerhalb einer Druckschicht 10 eignen sich die verschiedenen Möglichkeiten zur Einstellung der elastischen und optischen Eigenschaften der Mikrokapseln insbesondere zur Erzeugung verschiedener Bereiche 8, 9 innerhalb der Druckschicht 10, welche voneinander verschiedene elastische und/oder optische Eigenschaften aufweisen, wie dies in Fig. 5 schematisch dargestellt ist. Solche Bereiche können durch die Verwendung von Schablonen bei der Belichtung oder durch gezielte Ablenkung der Bestrahlung, beispielsweise durch einen Laser, erzeugt werden. Dadurch wird die Druckschicht 10 individualisiert. Beispielsweise können die verschiedenen Bereiche 8, 9 innerhalb der Druckschicht 10 in Form einer Information für den Betrachter ausgebildet werden. Zur Verbesserung der Sichtbarkeit der optischen Effekte der verschiedenen Bereiche wird die Druckschicht 10 mit einer stark absorbierenden, dunklen, beispielsweise einer schwarzen, Schicht hinterlegt. Dies bewirkt, dass Licht, welches nicht an dem cholesterischen Flüssigkristall der Mikrokapseln reflektiert wurde, vom Substrat absorbiert wird und damit den optischen Eindruck nicht stört.

In einem weiteren, nicht dargestellten Ausführungsbeispiel, ist der Hintergrund einer elastisch kompressiblen Druckschicht 10 nicht durchgängig dunkel oder schwarz, sondern weist eine farbige Information für den Betrachter auf. Die Farbe dieser Information entspricht dabei der Farbe, die von der in Betrachtungsrichtung davor liegenden Druckschicht 10 vollflächig reflektiert wird. Daher nimmt ein Betrachter in der unkomprimierten Ruhelage der Druckschicht 10 nur die reflektierte Farbe wahr, welche die gleichfarbige Hintergrundinformation verdeckt. Erst bei Veränderung der reflektierten Farbe beispielsweise durch mechanischen Druck auf die Druckschicht 10 wird die dahinter liegende Information erkennbar.

In einem weiteren, ebenfalls nicht dargestellten Ausführungsbeispiel werden piezochrome Mikrokapseln mit einer cholesterischen, flüssigkristallinen Phase zwischen zwei transparenten Folien, beispielsweise PET-Folien, angeordnet, beispielsweise innerhalb einer Folienverbundbanknote. Dabei kann der Abstand der Folien geeignet gewählt werden, so dass dabei beispielsweise eine im Vergleich mit üblichen Druckschichten erhöhte Menge von Mikrokapseln aufgebracht werden kann, was zu einer deutlichen Steigerung der Erkennbarkeit des optischen und piezochromen Effekts führt.

In Fig. 6a ist eine Druckschicht 10 mit Mikrokapseln 3 dargestellt. In einem Bereich 8 der Druckschicht 10 weist die cholesterische Phase 4 im Innern der Mikrokapseln 3 eine gegenüber den übrigen Bereichen erhöhte Ganghöhe auf. Dadurch zeigt der Bereich 8 eine gegenüber dem umliegenden Bereich in den langwelligeren Bereich des elektromagnetischen Spektrums verschobene Reflexionswellenlänge.

In Fig. 6b ist eine elastisch kompressible Druckschicht 10 mit elastischen Mikrokapseln 3 dargestellt. Der Bereich 8 weist gegenüber den umgebenden Bereichen unterschiedliche elastische Eigenschaften auf. Demzufolge wird die Druckschicht 10 bei gleichförmiger Druckausübung im Bereich 8 stärker komprimiert als in dem umliegenden Bereich. Dadurch weist die cholesterische Phase 4 im Innern der Mikrokapseln 3 im Bereich 8 der Druckschicht 10 eine gegenüber den übrigen Bereichen verringerte Ganghöhe auf. Dadurch zeigt der Bereich 8 eine gegenüber dem umliegenden Bereich in den kurzwelligeren Bereich des elektromagnetischen Spektrums verschobene Reflexionswellenlänge.

## Patentansprüche

1. Druckschicht, umfassend elastische Mikrokapseln, bei denen ein Polymer, nämlich ein kompressibles Elastomer, einen eine cholesterische Phase ausbildenden Flüssigkristall im Inneren der Mikrokapsel fixiert, wobei die Druckschicht wenigstens zwei, voneinander verschiedene elastische Eigenschaften besitzende Bereiche aufweist, die in der unkomprimierten Ruhelage des Elastomers, indem beide Bereiche eine identische vorbestimmte Ganghöhe der cholesterischen Phase aufweisen, identische optische Eigenschaften zeigen, und sich beide Bereiche bei Ausübung eines gleichmäßigen mechanischen Drucks auf die Druckschicht unterschiedlich deformieren, wodurch sich in einem komprimierten Zustand der Druckschicht bereichsweise unterschiedliche Ganghöhen ergeben und somit beide Bereiche anhand ihrer unterschiedlichen Reflexionsfarben von einem Betrachter nach oder bei Ausübung eines mechanischen Drucks erkannt werden können.

2. Druckschicht nach Anspruch 1, wobei die elastisch kompressible Druckschicht nach Kompression nur zeitlich verzögert in eine unkomprimierte Ruhelage zurückkehrt.

3. Druckschicht nach Anspruch 1, **dadurch gekennzeichnet, dass** die cholesterische Phase thermochrom ist oder durch die Wirkung zumindest einer Verdrillersubstanz beeinflussbar ist und vorzugsweise die Mikrokapseln jeweils eine oder eine Vielzahl von Kapseln mit einer zweiten Verdrillersubstanz enthalten.

4. Verfahren zur Herstellung einer Druckschicht nach Anspruch 1, umfassend die Schritte:
- schichtartiges Aufbringen einer Druckfarbe auf ein Substrat, wobei die Druckfarbe Mikrokapseln umfasst, die einen eine cholesterische Phase ausbildenden Flüssigkristall umfassen und weiterhin eine Vorstufe eines Polymers enthalten, wobei das Polymer geeignet ist, die flüssigkristalline Phase im Inneren der Mikrokapsel zu fixieren, und das Polymer ein kompressibles Elastomer ist,
- Einstellen der Ganghöhe der cholesterischen Phase auf eine vorbestimmte Ganghöhe, und
- Umwandeln der Vorstufe in das Polymer, wobei die vorbestimmte Ganghöhe der cholesterischen Phase im Inneren der Mikrokapseln fixiert wird und das Umwandeln der Vorstufe in das Elastomer derart bereichsweise unterschiedlich durchgeführt wird, dass in der Druckschicht zumindest zwei Bereiche mit voneinander verschiedenen elastischen Eigenschaften gebildet werden.

5. Verfahren nach Anspruch 4, wobei die cholesterische Phase thermochrom ist und die vorbestimmte Ganghöhe durch Einstellen der Temperatur der cholesterischen Phase eingestellt wird.

6. Verfahren nach Anspruch 4 oder 5, wobei die Ganghöhe der cholesterischen Phase durch die Wirkung zumindest einer Verdrillersubstanz beeinflusst wird und die vorbestimmte Ganghöhe durch Einstellen der Wirkung der zumindest einen Verdrillersubstanz eingestellt wird.

7. Verfahren nach Anspruch 6, wobei die Verdrillersubstanz photosensitiv ist, die Wirkung der Verdrillersubstanz durch Bestrahlung veränderbar ist und die vorbestimmte Ganghöhe durch Bestrahlen der Verdrillersubstanz eingestellt wird, vorzugsweise durch Bestrahlen mit elektromagnetischer Strahlung im infraroten Spektralbereich.

8. Verfahren nach Anspruch 6 oder 7, wobei die Verdrillersubstanz thermolabil ist, die Wirkung der Verdrillersubstanz durch thermische Einwirkung verringerbar ist und die vorbestimmte Ganghöhe durch thermische Einwirkung eingestellt wird.

9. Verfahren nach Anspruch 6, 7 oder 8, wobei die Mikrokapseln jeweils eine oder eine Vielzahl von Kapseln mit einer zweiten Verdrillersubstanz enthalten und die vorbestimmte Ganghöhe durch gezieltes Zerstören zumindest eines Teils der Kapseln eingestellt wird.

10. Sicherheitselement, umfassend eine Druckschicht nach einem der Ansprüche 1 bis 3.

11. Datenträger, umfassend ein Sicherheitselement nach Anspruch 10, wobei der Datenträger vorzugsweise ein Wertgegenstand, ein Sicherheitspapier, ein Sicherheitsdokument oder eine Produktverpackung ist.

12. Transferelement, umfassend einen Datenträger nach Anspruch 11, welches vorzugsweise ablösbar auf einer Trägerschicht aufgebracht ist.

## Claims

1. A printed layer comprising elastic microcapsules in which a polymer, namely a compressible elastomer, fixates in the interior of the microcapsule a liquid crystal forming a cholesteric phase, wherein the printed layer has at least two regions possessing mutually different elastic properties, said regions showing identical optical properties in the uncompressed rest position of the elastomer by the two regions having an identical predetermined pitch of the cholesteric phase, and the two regions being deformed differently upon exertion of a uniform mechanical pressure on the printed layer, thereby resulting in pitches differing in certain regions in a compressed state of the printed layer, so that the two regions can be recognized by a viewer by means of their different reflectance colors after or upon exertion of a mechanical pressure.

2. The printed layer according to claim 1, wherein the elastically compressible printed layer after compression returns to an uncompressed rest position only with a time delay.

3. The printed layer according to claim 1, **characterized in that** the cholesteric phase is thermochromic or can be influenced by the effect of at least one twister substance, and preferably the microcapsules contain respectively one or a multiplicity of capsules with a second twister substance.

4. A method for manufacturing a printed layer according to claim 1, comprising the steps of:
- applying in layered fashion a printing ink to a substrate, wherein the printing ink comprises microcapsules comprising a liquid crystal forming a cholesteric phase and further containing a precursor of a polymer, wherein the polymer is suitable to fixate the liquid-crystalline phase in the interior of the microcapsule, and the polymer is a compressible elastomer,
- adjusting the pitch of the cholesteric phase to a predetermined pitch, and
- transforming the precursor into the polymer, wherein the predetermined pitch of the cholesteric phase is fixated in the interior of the microcapsules and the transforming of the precursor into the polymer is executed differently in certain regions in such a fashion that in the printed layer at least two regions with mutually different elastic properties are formed.

5. The method according to claim 4, wherein the cholesteric phase is thermochromic and the predetermined pitch is adjusted by adjusting the temperature of the cholesteric phase.

6. The method according to claim 4 or 5, wherein the pitch of the cholesteric phase is influenced by the effect of at least one twister substance and the predetermined pitch is adjusted by adjusting the effect of the at least one twister substance.

7. The method according to claim 6, wherein the twister substance is photosensitive, the effect of the twister substance can be changed by irradiation and the predetermined pitch is adjusted by irradiating the twister substance, preferably by irradiating with electromagnetic radiation in the infrared spectral range.

8. The method according to claim 6 or 7, wherein the twister substance is thermolabile, the effect of the twister substance can be reduced by thermal action, and the predetermined pitch is adjusted by thermal action.

9. The method according to claim 6, 7 or 8, wherein the microcapsules respectively contain one or a multiplicity of capsules with a second twister substance, and the predetermined pitch is adjusted by targeted destruction of at least a part of the capsules.

10. A security element comprising a printed layer according to any of the claims 1 to 3.

11. A data carrier, comprising a security element according to claim 10, wherein the data carrier is preferably an object of value, a security paper, a security document or a product package.

12. A transfer element, comprising a data carrier according to claim 11, which is applied preferably detachably to a carrier layer.

## Revendications

1. Couche d'impression comprenant des microcapsules élastiques dans lesquelles un polymère, à savoir un élastomère compressible, fixe à l'intérieur de la microcapsule un cristal liquide formant une phase cholestérique, la couche d'impression comportant au moins deux zones qui possèdent des propriétés élastiques différentes les unes des autres et qui, dans la position de repos non comprimée de l'élastomère, par le fait que les deux zones présentent un pas prédéterminé identique de la phase cholestérique, montrent des propriétés optiques identiques, et les deux zones se déformant différemment lors de l'exercice d'une pression mécanique uniforme sur la couche d'impression, ce qui, dans un état comprimé de la couche d'impression, engendre dans certaines zones des pas différents et les deux zones pouvant ainsi être reconnues par un observateur grâce à leurs différentes couleurs réfléchissantes après ou pendant l'exercice d'une pression mécanique.

2. Couche d'impression selon la revendication 1, la couche d'impression élastiquement compressible ne retournant, après compression, que de manière différée dans le temps dans une position de repos non comprimée.

3. Couche d'impression selon la revendication 1, **caractérisé en ce que** la phase cholestérique est thermochromique ou est influençable par l'effet d'au moins une substance torsadante et **en ce que** de préférence les microcapsules contiennent respectivement une ou une pluralité de capsules renfermant une deuxième substance torsadante.

4. Procédé de fabrication d'une couche d'impression selon la revendication 1, comprenant les étapes:
- application en couche d'une encre d'impression sur un substrat, l'encre d'impression comprenant des microcapsules qui comprennent un cristal liquide formant une phase cholestérique et renferment en outre un précurseur d'un polymère, le polymère étant approprié à fixer la phase cristalline liquide à l'intérieur de la microcapsule, et le polymère étant un élastomère compressible,
- réglage du pas de la phase cholestérique sur un pas prédéterminé, et
- conversion du précurseur en le polymère, le pas prédéterminé de la phase cholestérique étant fixé à l'intérieur des microcapsules et la conversion du précurseur en le polymère étant effectuée de manière de telle sorte différente en certaines zones que, dans la couche d'impression, au moins deux zones ayant des propriétés élastiques différentes les unes des autres sont constituées.

5. Procédé selon la revendication 4, la phase cholestérique étant thermochromique et le pas prédéterminé étant réglé par réglage de la température de la phase cholestérique.

6. Procédé selon la revendication 4 ou 5, le pas prédéterminé de la phase cholestérique étant influencé par l'effet d'au moins une substance torsadante et le pas prédéterminé étant réglé par réglage de l'effet de la au moins une substance torsadante.

7. Procédé selon la revendication 6, la substance torsadante étant photosensible, l'effet de la substance torsadante étant modifiable par irradiation et le pas prédéterminé étant réglé par irradiation de la substance torsadante, de préférence par irradiation par rayonnement électromagnétique dans le domaine spectral infrarouge.

8. Procédé selon la revendication 6 ou 7, la substance torsadante étant thermolabile, l'effet de la substance torsadante pouvant être réduit par action thermique et le pas prédéterminé étant réglé par action thermique.

9. Procédé selon la revendication 6, 7 ou 8, les microcapsules contenant respectivement une ou une pluralité de capsules dotées d'une deuxième substance torsadante et le pas prédéterminé étant réglé par destruction ciblée d'au moins une partie des capsules.

10. Elément de sécurité comprenant une couche d'impression selon une des revendications de 1 à 3.

11. Support de données comprenant un élément de sécurité selon la revendication 10, le support de données étant de préférence un objet de valeur, un papier de sécurité, un document de sécurité ou un emballage de produit.

12. Elément de transfert comprenant un support de données selon la revendication 11, lequel est appliqué de manière de préférence détachable sur une couche support.
